# EUROPEAN PATENT APPLICATION

(11) **EP 3 185 409 A1**
(43) Date of publication of application: **28.06.2017**
(21) Application number: 16204049.7
(22) Date of filing: 14.12.2016
(51) Int. Cl.: H02M 3/335, H02H 1/06

(54) **VOLTAGE REGULATOR WITH AN ADJUSTABLE SHUNT REGULATOR CIRCUIT**

(30) Priority: 22.12.2015 EP 15003646
(71) Applicant: ABB Schweiz AG, 5400 Baden (CH)
(72) Inventor: Hozoi, Adrian, 68219 Mannheim (DE); Kaul, Holger, 74850 Schefflenz (DE)
(74) Representative: Marks, Frank

(57) **Abstract**

The invention is about a voltage regulator arrangement (1), comprising an adjustable shunt regulator circuit (2), which has a feedback loop with at least one feedback resistor (16) and a feedback input terminal (4), and which further has a regulated voltage output loop which comprises a first blocking diode (13) and a voltage output terminal (9), wherein the feedback loop further comprises a second diode (19) connected in series with the at least one feedback resistor (16).

## Description

### Specification

The invention is about a voltage regulator arrangement, comprising an adjustable shunt regulator circuit, which has a feedback loop with at least one feedback resistor and a feedback input terminal, and which further has a regulated voltage output loop which comprises a first blocking diode and a voltage output terminal, according to the preamble of claim 1.

The invention deals with voltage regulators having an electrical current as input and a regulated voltage as output and featuring extremely small leakage current from the output. The small leakage current allows maintaining a stable output voltage value for a certain duration when the input current is interrupted. Such feature is desired for example in self-supplied installation devices which must be able to execute limited functionalities after the power in the main circuit is shut down. The installation device may be employed for various purposes such as metering, control, monitoring, and protection of electrical equipment or electrical loads. Examples of such installation devices are electronic overload relays, circuit breakers, protective relays, motor starters, motor controllers, etc.

In self-supplied installation devices the energy required for operation is commonly supplied by one or more current transformers coupled to a main circuit. The secondary terminals of the transformer(s) are connected to a rectifier and the rectified signal supplies the voltage regulator. The installation devices are typically provided with means to measure the rectified secondary current, for example, by connecting a shunt resistor in series with the voltage regulator. Additional electrical circuitry is employed for amplifying and processing the signal from the shunt resistor such as an amplifier, an ADC, and a microcontroller. It is also possible to integrate most of the electrical circuitry or part of it into one or more ASIC(s).

A shunt regulator as such is known in the art. It is an essential element within linear power supply technology. The load is operated with a resistor in series with the voltage source and the shunt regulator then in parallel with the load. One of the most common and simple forms of a shunt regulator is a Zener diode in series with a resistor, the load being connected in parallel to the Zener diode. The performance of the simple shunt regulator can be enhanced by providing a feedback based on the output voltage of the shunt voltage regulator and feeding this back into the system to ensure that the required output voltage is accurately maintained. The output voltage is sensed and the voltage compared to a reference. The level of the shunt current is then altered to return the output voltage to the required level.

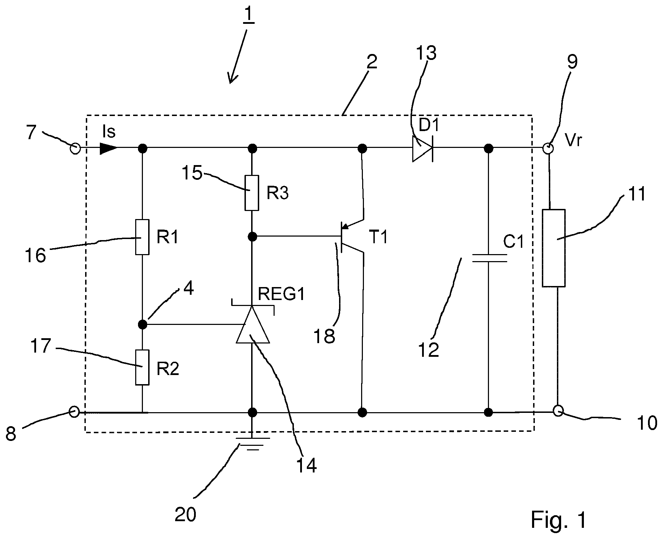

A shunt regulator allows generating a regulated output voltage from an input current. Shunt regulators are widely available as integrated circuit solutions but can also be implemented in ASICs or with discrete components. The output of adjustable shunt regulator ICs have high leakage current when the input current is interrupted. In applications such as self-supplied installation devices it is desired to cut the leakage current of the voltage regulator to extremely small values, for example, in the order of nA. To that purpose, it is known to add a blocking diode to the output of the voltage regulator as described in EP0477959 and US5657194 and also shown here in the example from Fig. 1. In this arrangement, the regulated output voltage is buffered in a buffer capacitor and the blocking diode blocks any significant leakage current from running back through the shunt regulator. A stable voltage can then be maintained on the buffer capacitor even when the input current to the shunt regulator is interrupted. The example from Fig. 1 employs an adjustable shunt regulator and two feedback resistors for setting the value of the output voltage. The transistor in figure 1 is used to increase the input current capability of the circuit.

Using a shunt regulator with a blocking diode on the output cuts efficiently the leakage current but adds significant uncertainty to the voltage value of the output. The value of the output voltage is influenced by the forward voltage of the blocking diode. The forward voltage of diodes has high manufacturing variation and moreover depends strongly on operating conditions such as forward current and temperature. For example, the forward voltage of a low leakage diode may vary between 0.4V and 1.0 V for forward currents from 0.01 mA to 1 mA and temperatures between -40°C and +85°C. The consequent variation of the regulated output voltage is very high, making the solution a sub-optimal choice for supplying low voltage circuitry.

It is often the case that low power and low voltage electronic circuitry must be operated with a supply voltage ranging from 2.5 V to 3.6 V. Using a blocking diode like in the prior art example shown in Fig.1 would cause a variation of the supply voltage from 2.7 V and 3.3 V for forward currents from 0.01 mA to 1 mA and temperatures between -40°C and +85°C. That is, most of the available range for the supply voltage of the electronic circuitry is consumed by the blocking diode leaving very small margin for other error sources introduced by the shunt regulator or the feedback resistors. Small margin on the supply voltage also results in reduced reliability against variations of the input current of the regulator such as peaks or dips.

The design of the electronic circuitry must thus deal with large variations of the supply voltage resulting in higher complexity and tradeoffs between cost, performance, and reliability.

Thus it is the objective of the present invention to provide a voltage regulator arrangement with a shunt voltage regulator with small leakage current and high accuracy at lower cost, with better performance and improved reliability.

The objective is achieved by a voltage regulator arrangement with the features of claim 1. So according to the invention the feedback loop further comprises a second diode connected in series with the at least one feedback resistor. The second diode, being part of the feedback loop, is therefore called a feedback diode. The second diode, or feedback diode, compensates for the voltage drop over the blocking diode, allowing to regulate the voltage directly at the cathode of the blocking diode. The error caused by the blocking diode to the regulated output voltage is equal in this case to the difference between the forward voltages of the blocking diode and of the second diode, which is smaller than the error caused by fluctuations of the forward voltage of only one blocking diode as is known in the prior art. The introduction of the second diode according to the invention thus lowers the variation of the regulated voltage, making the solution well suitable for supplying low voltage circuitry.

According to a preferred embodiment of the invention, the feedback loop comprises two feedback resistors connected in series and being operable as a voltage divider, the feedback input terminal being connected to the center connection point between both feedback resistors.

According to a preferred embodiment of the invention, the output loop comprises a first buffer capacitor connected in parallel to a load connected at the output terminal.

According to a preferred embodiment of the invention the shunt regulator comprises a Zener diode or an integrated circuit or an ASIC.

According to a preferred embodiment of the invention, the second diode is of the same type as the blocking diode.

According to a preferred embodiment of the invention, the second diode and the blocking diode are manufactured on the same semiconductor chip and/or in the same package.

According to a preferred embodiment of the invention, the voltage regulator arrangement is supplied by one or more current transformer(s) whose secondary circuit is connected to a rectifier comprising at least one diode.

According to a preferred embodiment of the invention, at least one switching device is connected between the input of the voltage regulator arrangement and a second buffer capacitor, via a second blocking diode, such that the switching device is conducting when the current flowing through the shunt regulator reaches or exceeds a certain value, and where the switching device is preferably a PNP transistor, biased by one or more resistors, connected directly or indirectly to the shunt regulator such that the electrical current circulating through said latter resistor increases with the current flowing through the shunt regulator.

According to a preferred embodiment of the invention, all blocking diodes and the feedback diode are of the same type.

According to a preferred embodiment of the invention, a further resistor is connected between the first buffer capacitor and the second buffer capacitor, and the second output capacitor has a capacitance value higher than that of the first output capacitor.

According to a preferred embodiment of the invention, the cathode connected to the first buffer capacitor and the anode connected to the second buffer capacitor and where the diode D5 has very small forward voltage being preferably a Shottky type diode.

According to a preferred embodiment of the invention, the gate is connected to the input of the voltage regulator arrangement, the source to the first buffer capacitor and the drain to the second buffer capacitor, and the second output capacitor has a capacitance value higher than that of the first output capacitor.

According to a preferred embodiment of the invention, at least one switching device is connected to the input of the voltage regulator arrangement to deliver an indicator signal whose voltage level depends on whether the current flowing through the shunt regulator is smaller or higher than a certain value, and where the switching device is preferably a PNP transistor, biased by one or more resistors, and whose collector is connected to a pull-down resistor or to a pull-down resistor network.

According to a preferred embodiment of the invention, the voltage regulator arrangement comprises one or more assemblies of buffer capacitor in series with blocking diode, connected in parallel to the second buffer capacitor, and the second blocking diode.

According to a preferred embodiment of the invention, the voltage regulator arrangement comprises additional circuitry to increase its current handling capability and/or to control the switching devices, such as a transistor, biasing resistors and/or diodes.

According to a preferred embodiment of the invention, the voltage regulator arrangement comprises an input capacitor connected in parallel with the voltage regulator arrangement, a shunt resistor connected in series with the voltage regulator arrangement, and a transient voltage suppression device connected in parallel to the shunt resistor and the voltage regulator arrangement.

According to a preferred embodiment of the invention, the electronic circuitry of the voltage regulator arrangement is partly or fully integrated in a circuit such as an ASIC.

The invention will be described in greater detail by description of six embodiments with reference to the accompanying drawings, wherein
- Figure 1: shows a shunt voltage regulator with small leakage current known from the prior art, including an adjustable shunt regulator REG1, feedback resistors R1 and R2, a current sink transistor T1, and a blocking diode D1,
- Figure 2: shows a voltage regulator arrangement according to a first embodiment of the invention, where the feedback resistor network includes a diode D2 matched to the blocking diode D1,
- Figure 3: shows another embodiment of the voltage regulator according to the invention, having two separated outputs provided with buffer capacitors and with prioritized start-up scheme, wherein the second output is activated by the transistor T2 after the buffer capacitor of the first output has charged,
- Figure 4: shows a further embodiment of the voltage regulator according to the invention having one single output featuring both fast start-up time and high energy storage capability, where the buffer capacitor C1 provides fast start-up time and the buffer capacitor C2 provides high energy storage, and where the two capacitors are interconnected by the diode D5 in parallel to the resistor R5,
- Figure 5: shows an embodiment similar to the one from Fig. 4, but using a MOSFET to connect the storage capacitor C2 to the start-up capacitor C1,
- Figure 6: shows a further embodiment of the voltage regulator featuring two separated outputs, one primary output with fast start-up time and high energy storage capability and one secondary output with delayed start-up and high energy storage capability,
- Figure 7: shows a further embodiment of the voltage regulator including a transistor T4 to provide power status indication.

In the figures, identical or equivalent elements and components or elements and components performing an equivalent function have the same reference numerals.

Figure 1 shows a voltage regulator arrangement 1 with a shunt voltage regulator 2 as known in the prior art. An electric current I_{S} enters the voltage regulator arrangement 1 at input terminals 7, 8. A regulated voltage output Vᵣ appears at output terminals 9, 10, feeding a load 11. The regulated output voltage Vᵣ is buffered in a buffer capacitor C1, reference numeral 12.A blocking diode D1, reference numeral 13, is connected in the branch between output terminal 9 and input terminal 7. It blocks any significant leakage current from running back through the shunt regulator 2. A stable voltage Vᵣ can then be maintained on the buffer capacitor 12 even when the input current I_{S} to the shunt regulator 2 is interrupted. The voltage regulation is achieved by a regulator unit REG1, reference numeral 14, here an adjustable Zener diode with a feedback input terminal 4, connected in series with a current limiting resistor R3, reference numeral 15. Two feedback resistors R1, R2, reference numerals 16, 17, are employed between the input terminals 7, 8 for setting the value of the output voltage Vᵣ. The center connection point between the two feedback resistors 16, 17 is connected to the feedback input terminal 4 of the regulator unit 14. A current sink transistor T1, reference numeral 18, is used to increase the input current capability of the circuit 2.

The blocking diode D1 is via the emitter-basis- path of the transistor 18 connected between the shunt regulator unit 14 and the buffer capacitor 12.

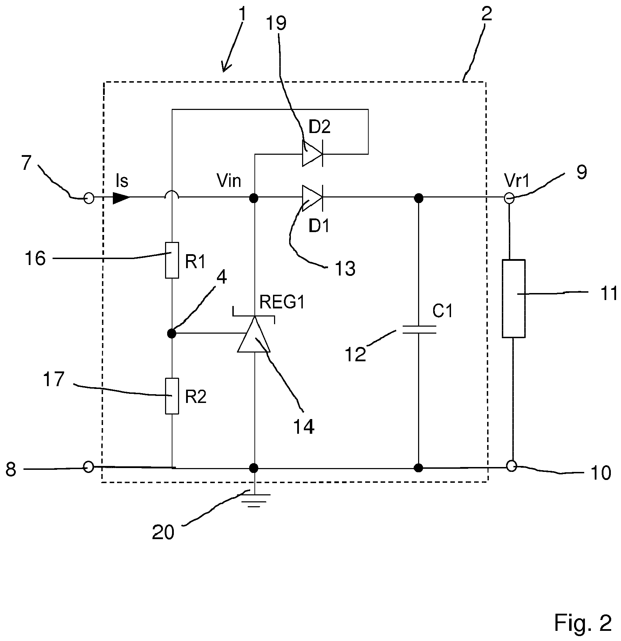

The present invention provides a method to precisely regulate the output voltage of a shunt regulator circuitry comprising a blocking diode, by adding a second diode D2, reference numeral 19, see figure 2, into the feedback loop of the shunt regulator. An example is shown in figure 2, where the second, so-called feedback diode 19 is connected in series with the first feedback resistor R1, reference numeral 16, connected to the feedback or reference input 4 of the shunt regulator unit 14. The feedback diode 19 compensates for the voltage drop over the blocking diode 13, allowing to regulate the voltage directly at the cathode of the blocking diode 13, that is on the buffer capacitor 12. The error caused by the blocking diode 13 to the regulated output voltage Vᵣ is equal in this case to the mismatch between the forward voltages of the blocking diode 13 and of the feedback diode 19.

The accuracy of the output voltage Vᵣ is improved if the diodes 13, 19 feature identical construction and characteristics, such that they have identical or almost identical voltage drop. Excellent matching of their electrical parameters is achieved when both diodes are built on the same chip such that they are manufactured using exactly the same processing. Having both diodes implemented on the same chip also ensures excellent thermal coupling such that they are practically operating at the same temperature. In practice, the forward voltages of the diodes 13and 19 can be matched to less than +/-0.07 V, for output currents from 0.01 mA to 1 mA and temperatures between -40°C and +85°C. This is more than 4 times better than the variation of the forward voltage of the blocking diode 13 alone under similar operating conditions.

The proposed solution therefore allows reaching both high accuracy of the regulated output voltage and extremely small leakage current. If extremely small leakage current is desired, a low leakage diode pair may be employed to reach typical leakage currents below 1 nA under normal operating conditions. The example from figure 2 features a ground connection 20 just for simplicity considerations, however, such ground connection 20 is not required for the operation of the circuit. Different grounding schemes, as are in principle known to the person skilled in the art, are possible. For example, a floating ground or no ground connection would also be possible.

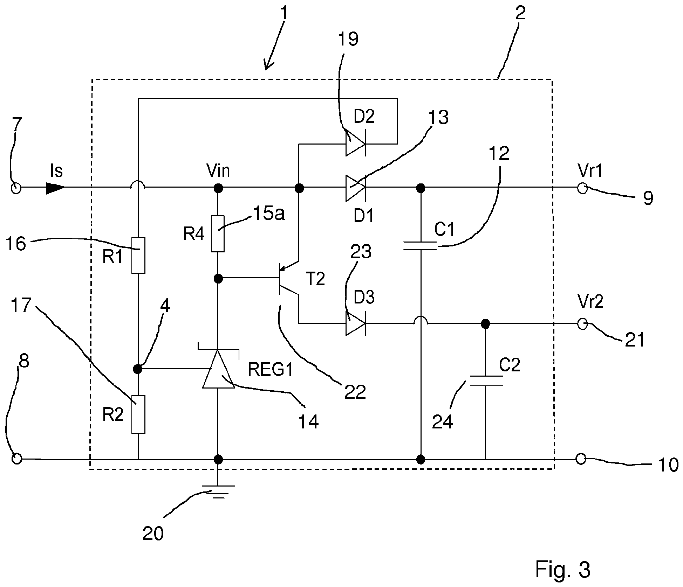

The voltage regulator circuitry according to the invention may be further extended to provide faster start-up times or multiple outputs. The embodiment shown in figure 3 provides two separated voltage outputs Vᵣ₁, Vᵣ₂, one via the first blocking diode D1, reference numeral 13, at the first output terminal 9, and the second via the collector of the PNP transistor T2, reference numeral 22, and a second blocking diode D3, reference numeral 23. A first buffer capacitor C1, reference numeral 12, is connected between the first output terminal 9 and ground 20. A second buffer capacitor C2, reference numeral 24, is connected between the second output terminal 21 and ground 20. When the regulator 14 is powered on, the first buffer capacitor C1, reference numeral 12, starts charging via the first blocking diode 13, while the transistor 22 is closed and no current flows to the second buffer capacitor C2, reference numeral 24. After the first buffer capacitor 12 has charged, electrical current starts flowing through the emitter of the transistor 22 bringing it into conduction and starting charging the buffer capacitor 24. When the buffer capacitor 24 is fully charged, the transistor 22 enters into saturation and the voltage drop from the emitter to the collector becomes negligible. If the diodes 23 and 13 are similar or of the same type, the voltage level achieved on the capacitor 24 is almost equal to the voltage on the capacitor 12.

So in the embodiment shown in figure 3, there is a switching device in form of transistor T2 connected between the input 7 of the voltage regulator arrangement 2 and the second buffer capacitor C2 via the second blocking diode D3, such that the switching device 22 is conducting when the current flowing through the shunt regulator element 14 reaches or exceeds a certain value. The switching device 22 is preferably a PNP transistor. Transistor T2 is biased by one or more limiting resistors R4, reference numeral 15a, connected in series to the shunt regulator element 14 such that the electrical current circulating through R4 increases with the current flowing through the shunt regulator element 14.

The arrangement from figure 3 in this way allows achieving very fast start-up time of the voltage across the first buffer capacitor 12 without being constrained by the time needed to charge the second buffer capacitor 24. It is thus possible to achieve fast start-up time and high energy storage capability by optimizing the capacitance value of the first buffer capacitor 12 for fast start-up time and the capacitance value of the second buffer capacitor 24 for the energy storage needs. A supercapacitor or a rechargeable battery could also be used in parallel to the second capacitor 24 or instead of the second capacitor 24.

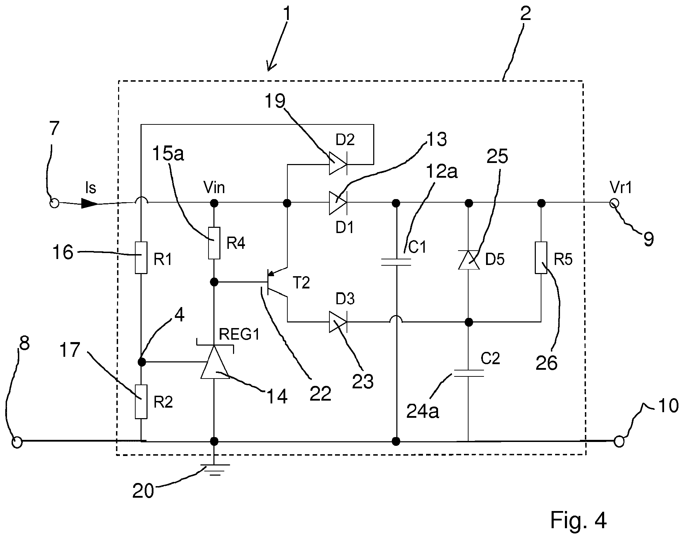

Now looking at figure 4, this shows an embodiment, where fast start-up time and large energy storage can even be provided on the same output 9 of the regulator 2 by charging first a small capacitor C1, reference numeral 12a, and subsequently a second, larger capacitor C2, reference numeral 24a, and allowing the electrical current to easily source from the larger capacitor C2, reference numeral 24a, to the small capacitor C1, reference numeral 12a, but not from the small capacitor C1 to the larger capacitor C2. This can be achieved by connecting another diode D5, reference numeral 25, between the larger capacitor C2, reference numeral 24a, to the small capacitor C1, reference numeral 12a, as in the example shown in figure 4. The diode D5 has its cathode connected to the first buffer capacitor C1 and its anode connected to the second buffer capacitor C2. This further diode 25 would preferably have very small forward voltage such as a Schottky diode. A further resistor R5, reference numeral 26, may be connected in parallel to the diode 25 to further reduce the voltage drop over the diode 25 at small currents. The value of the resistor 26 shall be sufficiently high such that the time constant of R5 and C2 is significantly higher than the desired start-up time of the circuit. It is also possible to connect only the resistor R5 without the diode D5, but the voltage drop over R5 would increase proportionally to the current sourced from C2.

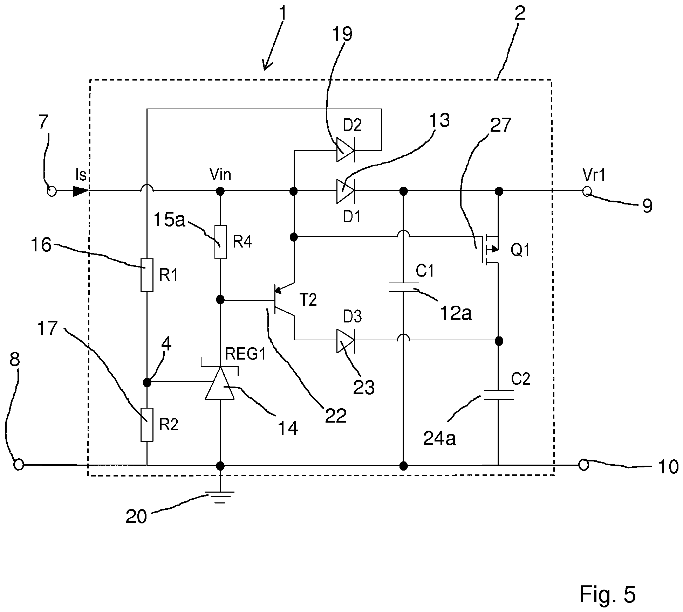

Figure 5 shows a further embodiment which is a variation of the embodiment shown in figure 4. Here in figure 5 the circuit made up of the diode D5, reference numeral 25 and resistor 5, reference numeral 26, is replaced by a MOSFET Q1, reference numeral 27. The MOSFET 27 here in the example is a P-channel MOSFET. It has its gate connected to the input terminal 7 of the voltage regulator arrangement 2, and its source connected to the first buffer capacitor C1, and its drain connected to the second buffer capacitor C2. This allows unidirectional current flow from C2 to C1.

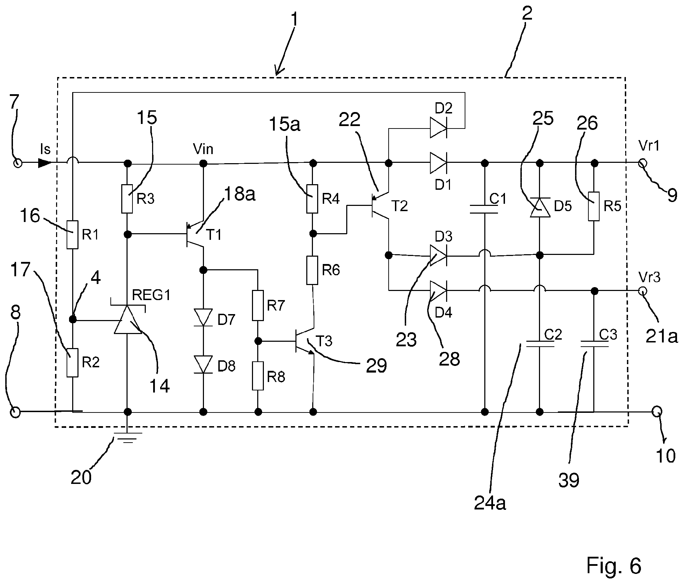

Figure 6 shows a further embodiment, where additional separated outputs are provided to the voltage regulator arrangement 2. An additional blocking diode D4, reference numeral 28 is connected between the collector of transistor T2, reference numeral 22, and a second voltage output terminal 21 a. This allows generating an additional output buffered by a third capacitor C3, reference numeral 39, connected in parallel to the second capacitor 24a. The third buffer capacitor C3 is connected in series with the additional blocking diode D4. The additional blocking diode D4 is connected in parallel to the serial connection of the second buffer capacitor C2 and the second blocking diode D3.

The embodiment shown in figure 6 also contains additional circuitry based on the transistors T1, reference numeral 18a, and T3, reference numeral 29, to allow sinking higher current and increasing the input current capability of the regulator 2.

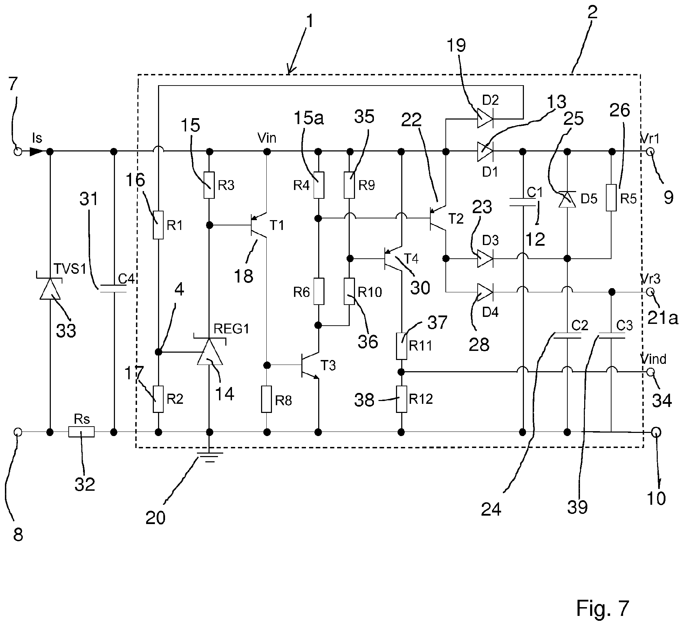

Figure 7 shows a further embodiment, where a switching device in form of an additional transistor T4, reference numeral 30, is connected in parallel to transistor T2, reference numeral 22, to provide a digital or analog signal for indicating the power status of the regulator 2 and accessible through an indicator terminal 34. The voltage level of the indicator signal V_{ind} provided at the indicator terminal 34 depends on whether the current flowing through the shunt regulator element 14 is smaller or higher than a certain value. The switching device T4 is a PNP transistor, biased by two resistors R9, R10, reference numerals 35, 36. Its collector is connected to a pull-down resistor network including the resistors R11 and R12, reference numerals 37, 38.

The transistor T4, reference numeral 30, turns on when the start-up phase has been completed and turns off when the input current to the regulator 2 becomes too small for supplying the electronic circuitry. The embodiment shown in figure 7 also includes an input capacitor C4, reference numeral 31, connected between the input terminal 7 and ground 20, so to say in parallel to the shunt voltage regulator circuit, allowing to filter the input current to the regulator 2.

It further includes a further shunt resistor Rs, reference numeral 32, connected between the second input terminal 8 and ground 20, so to say in series with the shunt voltage regulator circuit, allowing to measure the input current.

It further includes a transient voltage suppression device TVS1, reference numeral 33, here a Zener diode, connected in parallel across the input terminals 7, 8, so to say in parallel to the shunt resistor R_{S} and the voltage regulator circuit. Additionally, an inductor or a ferrite bead may also be connected to the input capacitor C4 if stronger filtering is required.

The invention described here allows thus implementing a shunt voltage regulator 2 with very small leakage current and high accuracy as well as very fast start-up time.

It can additionally provide multiple separated voltage outputs, high current handling capability, and power status indicator all in a very cost efficient manner.

The voltage regulator arrangement described in this invention is particularly suitable to be used in self-supplied installation devices but is not limited to this type of applications.

In the case of self-supplied installation devices, the input current to the voltage regulator arrangement would be provided by the secondary circuit of one or more current transformer(s) connected to a rectifier. The regulated output featuring fast start-up time may supply the main electronic circuitry of an installation device. Fast start-up time is then desired to immediately enable critical functionalities such as control and protection. Very low current leakage allows increased operating time of the installation after the main circuit is de-energized. The power status indicator would allow implementing enhanced power management schemes resulting in improved reliability. The main circuit of the installation device may include signal processing and control circuitry, analog or digital. Using microcontrollers and ASICs is increasingly common. The signal processing circuitry may serve to measure the secondary current of the current transformers, using one or more shunt resistors. The installation device may also include auxiliary circuitry which it may be beneficial to supply with separated voltage sources. A voltage regulator arrangement with multiple separated voltage outputs featuring different start-up priority levels is therefore of high interest and provides maximum flexibility to optimize the design of an installation device.

The voltage regulator arrangement may be implemented using a combination of integrated circuit(s) and discrete components. It is also possible to be fully or almost fully integrated into one ASIC, alone or together with other circuitry of the installation device such that minimum footprint is achieved.

### Bezu^{q}szeichenliste

- 1: voltage regulator arrangement
- 2: shunt regulator circuit
- 3: first feedback resistor
- 4: feedback input terminal
- 5: first blocking diode
- 6: voltage output terminal
- 7: input terminal
- 8: input terminal
- 9: output terminal
- 10: output terminal
- 11: load
- 12: first buffer capacitor
- 12a: first buffer capacitor
- 13: blocking diode
- 14: regulator unit, zener diode
- 15: current limiting resistor
- 15a: resistor R4
- 16: feedback resistor R1
- 17: feedback resistor R2
- 18: transistor T1
- 18a: transistor T1
- 19: second diode D2
- 20: ground connection
- 21: second output voltage terminal
- 21a: second output voltage terminal
- 22: transistor T2
- 23: second blocking diode D3
- 24: second buffer capacitor C2
- 24a: second buffer capacitor C2
- 25: diode D5
- 26: resistor R5
- 27: MOSFET Q1
- 28: diode D4
- 29: Transistor T3
- 30: transistor T4
- 31: input capacitor
- 32: additional shunt resistor
- 33: transient voltage supressing device
- 34: indicator terminal
- 35: resistor R5
- 36: resistor R10
- 37: resistor R11
- 38: resistor R12
- 39: third capacitor C3

## Claims

1. A voltage regulator arrangement (1), comprising an adjustable shunt regulator circuit (2), which has a feedback loop with at least one feedback resistor (16) and a feedback input terminal (4), and which further has a regulated voltage output loop which comprises a first blocking diode (13) and a voltage output terminal (9),
**characterized in that** the feedback loop further comprises a second diode (19) connected in series with the at least one feedback resistor (16).

2. A voltage regulator arrangement (1) according to claim 1, **characterized in that** the feedback loop comprises two feedback resistors (16, 17) connected in series and being operable as a voltage divider, the feedback input terminal (4) being connected to the center connection point between both feedback resistors (16, 17).

3. A voltage regulator arrangement (1) according to claim 1, **characterized in that** output loop comprises a first buffer capacitor (12) connected in parallel to a load (11) connected at the output terminal (9).

4. A voltage regulator arrangement (1) according to claim 1, **characterized in that** the shunt regulator (14) comprises a Zener diode or an integrated circuit or an ASIC.

5. A voltage regulator arrangement (1) according to any of claims 1 to 4, **characterized in that** said voltage regulator arrangement comprises a second buffer capacitor (24), a second blocking diode (23) and at least one switching device (22), wherein said at least one switching device (22) is connected between the input (9) of the voltage regulator arrangement (2) and the second buffer capacitor (24)via said second blocking diode (23), such that the switching device (22) is conducting when the current flowing through the shunt regulator (14) reaches or exceeds a certain value.

6. A voltage regulator arrangement (1) according to claim 5, **characterized in that**, the switching device (22) is a PNP transistor, biased by one or more resistors (15a), connected directly or indirectly to the shunt regulator (14) such that the electrical current circulating through said biasing resistor (15a) increases with the current flowing through the shunt regulator (14).

7. A voltage regulator arrangement (1) according to claim 6, **characterized in that** the first and second blocking diodes (13, 23) and the feedback diode (19) are of the same type.

8. A voltage regulator arrangement (1) according to claim 7, **characterized in that** a further resistor (26) is connected between the first buffer capacitor (12a) and the second buffer capacitor (24a) and where the second buffer capacitor (24a) has a capacitance value higher than that of the first buffer capacitor (12a).

9. A voltage regulator arrangement (1) according to claim 8, **characterized in that** said voltage regulator arrangement (1) further comprises a further diode (25), having its cathode connected to the first buffer capacitor (12a), and its anode connected to the second buffer capacitor (24a), and wherein the diode (25) has a very small forward voltage.

10. A voltage regulator arrangement (1) according to claim 9, **characterized in that** the further diode (25) is a Schottky type diode.

11. A voltage regulator arrangement (1) according to claim 8, **characterized in that** said voltage regulator arrangement further comprises a MOSFET (27) having its gate connected to the input (9) of the voltage regulator arrangement (1), its source to the first buffer capacitor (12a), and its drain to the second buffer capacitor (24a), and wherein the second buffer capacitor (24a) has a capacitance value higher than that of the first buffer capacitor (12a).

12. A voltage regulator arrangement (1) according to claim 8, **characterized in that** said voltage regulator arrangement (1) further comprises t least one further switching device (30) connected to the input (9) of the voltage regulator arrangement (1) to deliver an indicator signal whose voltage level depends on whether the current flowing through the shunt regulator (14) is smaller or higher than a certain value.

13. A voltage regulator arrangement (1) according to claim 12, **characterized in that** the further switching device (30) is a PNP transistor biased by one or more resistors (35), and whose collector is connected to a pull-down resistor (37) or to a pull-down resistor network (37, 38).

14. A voltage regulator arrangement (1) according to any of claims 1 to 13, **characterized in that** the voltage regulator arrangement (1) further comprises an input capacitor (31) connected in parallel with the voltage regulator circuit (2), a shunt resistor (32), connected in series with the voltage regulator circuit (2), and a transient voltage suppression device (33) connected in parallel to the shunt resistor (32) and the voltage regulator circuit (2).

15. Installation device, including a voltage regulator arrangement (1) according to any one of the preceding claims.
